# EUROPÄISCHE PATENTSCHRIFT

(11) **EP 2 115 088 B1**
(45) Veröffentlichungstag und Bekanntmachung des Hinweises auf die Patenterteilung: **13.03.2013**
(21) Anmeldenummer: 08707113.0
(22) Anmeldetag: 17.01.2008
(51) Int. Cl.: C09K 5/06

(54) **VERWENDUNG VON AMID-VERBINDUNGEN ZUR SPEICHERUNG VON LATENTER WÄRME**
USE OF AMIDE COMPOUNDS FOR ACCUMULATING LATENT HEAT
UTILISATION DE COMPOSÉS AMIDE POUR L'ACCUMULATION DE CHALEUR LATENTE

(30) Priorität: 18.01.2007 DE 102007002796
(43) Veröffentlichungstag der Anmeldung: 11.11.2009
(73) Patentinhaber: AlzChem AG, 83308 Trostberg (DE)
(72) Erfinder: GUETHNER, Thomas, 83308 Trostberg (DE)
(74) Vertreter: Dey, Michael
(86) Internationale Anmeldenummer: PCT/EP2008/000348
(87) Internationale Veröffentlichungsnummer: WO 2008/087032

(56) Entgegenhaltungen:
- EP-A- 0 623 662
- WO-A-2007/141123
- DE-A1- 3 710 710
- US-A- 5 718 835
- US-B1- 6 447 692
- DATABASE WPI Week 198249 Derwent Publications Ltd., London, GB; AN 1982-05844J XP002481198 & JP 57 177085 A (NIPPON PETROCHEMICALS CO LTD) 30. Oktober 1982 (1982-10-30)
- DATABASE WPI Week 199824 Derwent Publications Ltd., London, GB; AN 1998-267373 XP002481199 & JP 10 088117 A (MITSUBISHI CHEM CORP) 7. April 1998 (1998-04-07)

## Beschreibung

Die vorliegende Erfindung betrifft die Verwendung von Amid-Verbindungen zur Speicherung von thermischer Energie in Form von latenter Wärme.

Latentwärmespeicher sind ein kostengünstiges und ökologisch sinnvolles Mittel zur Einsparung von fossiler Primärenergie.

Sonnenenergie steht in praktisch unbegrenzter Menge weltweit zur Verfügung. Der Zeitpunkt, zu dem die Sonnenenergie zur Verfügung steht, stimmt jedoch meist nicht mit dem Zeitpunkt des Wärmebedarfs überein. Es ergibt sich hieraus Bedarf für Speichermaterialien, die Solarwärme speichern und zum gewünschten Zeitpunkt wieder freisetzen können.

Auch in technischen Prozessen oder Vorrichtungen fällt oft Wärme an, die direkt nicht genutzt werden kann, da sie zum falschen Zeitpunkt zur Verfügung steht. Bspw. produziert ein KFZ-Motor Wärme, die ungenutzt in die Umwelt entweicht. Ein kalter KFZ-Motor hingegen verbraucht wesentlich mehr Treibstoff, bis er sich auf Betriebstemperatur erwärmt hat. Könnte die Wärmeenergie gespeichert und vor Start des Motors zur Erwärmung desselben genutzt werden, würde der Treibstoffverbrauch deutlich gesenkt. Gewächshäuser müssen in vielen Regionen der Welt tagsüber gekühlt werden. Nachts bzw. zu bestimmten Jahreszeiten muss hingegen geheizt werden, um ein optimales Pflanzenwachstum zu ermöglichen. Auch hier würde ein Wärmespeicher die tagsüber ungenutzte Wärme puffern, und zum Bedarfszeitpunkt wieder zur Verfügung stellen.

Zur Speicherung von Wärme mittels eines Latentwärmespeichermediums sollte dieses eine möglichst hohe Schmelzwärme aufweisen. Sein Schmelzpunkt sollte im Bereich des als Energiequelle zur Verfügung stehenden bzw. zur Heizenergie geforderten Temperaturniveaus liegen. Typische Temperaturen liegen im Bereich zwischen 40 und 180 °C. Zudem sollten geeignete Materialien ökologisch und toxikologisch unbedenklich sein, preiswert herstellbar bzw. erhältlich sein, sowie eine für den beabsichtigten Einsatzbereich ausreichende chemische Stabilität und Lebensdauer aufweisen.

Derartige Latentwärmespeicher-Medien sind im Prinzip bereits viele bekannt (vgl. S.D.Sharma et al., Res. Rep. Fac. Eng. Mie Univ. 29, 31 (2004)). Die bekannten technisch anwendbaren Substanzklassen gruppieren sich wie folgt:
Paraffin-Kohlenwasserstoffe: Die niederen n-Paraffine bis einschließlich n-Eicosan weisen Schmelzwärmen bis über 200 J/g auf, wobei die Schmelzpunkte unterhalb 40 °C, d. h. außerhalb des technisch gewünschten Bereichs liegen. Höhere n-Paraffine besitzen zwar Schmelzpunkte bis über 70 °C, sind jedoch nur sehr schwer in der geforderten Reinheit herstellbar bzw. aus petrochemischen Fraktionen isolierbar. Polyethylen bzw. Polyethylenwachse weisen ähnliche Molekülstruktur und Eigenschaften auf, die zudem in gewissen Grenzen einstellbar sind, die Herstellweise durch Polymerisation bedingt jedoch eine Molekulargewichtsverteilung, die einen - technisch ungünstigen - relativ breiten Schmelzbereich zur Folge hat.

Alkohole, Glykole und Zucker: Vorschlagen wurden eine Reihe von Alkoholen, wie z.B. Glycerin, Polyethylenglykol, Erythrit, Mannit, Sorbit, Glykolsäure, Fettalkohole, Glucose, Fructose. Viele dieser Stoffe haben Schmelzpunkte, die unterhalb des technisch sinnvollen Temperaturbereichs liegen. Andere Stoffe (z. B. die Zucker bzw. Zuckeralkohole) reagieren oberhalb des Schmelzpunktes unter Bildung gefärbter, polymerer Produkte, so dass eine Langzeitstabilität nicht gewährleistet ist.

Fettsäuren wurden von vielen Autoren als günstige Latentwärmespeichermedien beschrieben. Mit den aus natürlichen Quellen preiswert zugänglichen gesättigten Fettsäuren mit 10 bis 18 C-Atomen lässt sich ein Schmelzpunkt-Bereich zwischen 30 und 69 °C abdecken. Dies ist für einige Anwendungen ausreichend, andere benötigen höhere Temperaturen. Die Schmelzwärmen sind technisch vorteilhaft, liegen zwischen 150 bis über 200 J/g. Nachteilig ist hingegen, dass Fettsäuren korrosiv gegenüber Metallen wirken, so dass spezielle Materialien und/oder Korrosionsschutzmaßnahmen erforderlich werden.

Fettsäureester: Ester der Fettsäuren mit 10 bis 18 C-Atomen mit einfachen C₁-C₄-Alkoholen weisen für technische Anwendungen zu niedrige Schmelzpunkte auf. Ester mit Ethylenglykol bzw. Glycerin weisen - wenn sie aus gereinigten Fettsäuren hergestellt wurden - günstige Schmelzbereiche auf, die Schmelzwärmen sind zudem relativ hoch (bis über 200 J/g). Nachteilig ist jedoch, dass diese Ester mit Wasser leicht hydrolysieren, zudem bei höheren Temperaturen unter Abspaltung von Alkenen pyrolysieren, so dass die geforderte Langzeitstabilität nicht gewährleistet ist.

Wasserfreie anorganische Materialien: Wurden teilweise vorgeschlagen, finden jedoch keine praktische Anwendung. Stoffe mit geeignetem Schmelzpunkt (z. B. AsBr₃, SbCl₃, SO₃, TiBr₄, Gallium- oder Indiumhaltige Legierungen) sind meist sehr reaktiv und toxisch, zudem für die meisten Anwendungen zu teuer.

Anorganische Salzhydrate: Diese Gruppe enthält die ältesten bekannten Latentwärmespeichermedien. Beispiele sind Natriumsulfat-Decahydrat, Natriumcarbonat-Decahydrat, Calciumbromid-Hexahydrat, Magnesiumsulfat-Heptahydrat, Natriumacetat-Trihydrat, Bariumhydroxid-Octahydrat und viele andere (vgl. S.D. Sharma). Obwohl viele dieser Stoffe günstige Schmelzpunkte und Schmelzwärmen aufweisen sowie preiswert zugänglich sind, sind sie jedoch im technischen Einsatz problematisch. Aufgrund ihres inkongruenten Schmelzverhaltens, tritt nach einigen Speicherzyklen eine Entmischnug auf und die speicherbare Latentwärme fällt drastisch ab. Zudem sind viele dieser Salze stark korrosiv, was Werkstoffprobleme aufwirft.

Amide wurden bislang nur sehr wenige im Hinblick auf eine Verwendung als Latentwärmespeichermedien untersucht.

JP 57-177085 offenbart ein Wärmespeichermaterial, welches aus Säureamiden der allgemeinen Formel CₙH₂ₙ₊₁-CO-NH-CₚH₂ₚ₊₁ (mit n = 15-18; p = 1-18) besteht und u.a. im Bereich der Solarenergie eingesetzt werden kann. Die Säureamide werden durch Umsetzung geeigneter Fettsäuren, wie beispielsweise Palmitinsäure oder Stearinsäure, mit einem primären Amin, wie beispielsweise Methylamin oder Octadecylamin, erhalten.

DE 37 10 710 A1 beschreibt einen Kondensations-Wäschetrockner, welcher einen Umluftventilator, einen elektrischen Lufterhitzer, einen Wäschebehälter, einen Wärmetauscher und einen Latentwärmespeicher umfasst. Der Latentwärmespeicher ist mit einem Wärmespeichermaterial befüllt, bei welchem es sich u.a. um ein Gemisch aus 74.9 Gew.-% Palmitinsäure und 25.1 Gew.-% Propionamid handeln kann.

JP 10-088117 betrifft ein Wärmespeichermaterial, welches einen Zuckeralkohol ausgewählt aus der Gruppe bestehend aus Erythritol, Mannitol und Galaktitol in Kombination mit einem Säureamid, enthaltend einen Fettsäurerest mit mindestens 12 Kohlenstoffatomen, umfasst und u.a. zur Verwendung in Klimaanlagen oder zur Beheizung von Fußböden vorgesehen ist.

EP 0 623 662 A1 offenbart Mikrokapseln zur Einlagerung von Wärmespeichermaterial, welche eine zur Durchführung von Phasenübergängen befähigte Verbindung umschließen, wobei die Mikrokapseln eine hochschmelzende Verbindung mit einem Schmelzpunkt von 20-110°C über dem Schmelzpunkt der zur Durchführung von Phasenübergängen befähigten Verbindung umfassen. Als Beispiele für derartige hochschmelzende Verbindungen werden u.a. Stearinsäureamid und Laurinsäureamid genannt.

US 5,718,835 beschreibt ein Wärmespeichermaterial, welches durch Mischen einer Wärmespeicherkomponente und einer Komponente, die ein thermoplatisches Elastomer und synthetischen oder natürlichen Gummi umfasst, erhalten wird und u.a. ein Amidwachs wie Ethylenbisstearamid umfassen kann. Die Wärmespeicherkomponente umfasst ihrerseits mindestens ein Wachs mit einem Schmelzpunkt von ≥ 0°C und einen Monohydroxyalkohol mit mindestens 12 Kohlenstoffatomen und einem Schmelzpunkt von ≥ 0°C.

Der preiswerte Harnstoff (Schmelzpunkt 132 °C, Schmelzwärme 63,5 J/g) wurde im Hinblick auf seine Verwendbarkeit als Latentwärmespeicher untersucht. Im Ergebnis wurde gefunden, dass Harnstoff aufgrund seiner schnellen Zersetzlichkeit oberhalb des Schmelzpunktes nicht geeignet ist (vgl. A. Sharma, Int. J. Energy Research 25, 465 (2001)).

Cyanamid (Schmelzpunkt 42 bis 44 °C, Schmelzwärme 209 J/g) zersetzt sich bereits am Schmelzpunkt mit heftiger exothermer Reaktion und ist deshalb nicht geeignet.

Ethylurethan (Schmelzpunkt Schmelzpunkt 48,7 °C, Schmelzwärme 170,5 J/g) zersetzt sich leicht in Dimethylcarbonat, Isocyansäure und heterocyclische Produkte, ist zudem giftig und krebserregend, so dass es für die beabsichtigte technische Anwendung nicht in Frage kommt.

Aromatische Amide wie z. B. Benzamid, Benzanilid, N-Acetyl-p-toluidin wurden ebenfalls untersucht. Aufgrund ihrer relativ teuren Herstellwege und der ungünstigen toxikologischen Eigenschaften sind sie für die beabsichtigte Anwendung als Latentwärmespeicher nicht geeignet.

Bekannt ist, dass Acetamid einen vorteilhaften Schmelzpunkt von 81 °C sowie eine relativ hohe Schmelzwärme von 217,5 J/g aufweist. Allerdings ist Acetamid ein Stoff mit krebserzeugender Wirkung, so dass sich seine Anwendung als Latentwärmespeicher verbietet.

Der vorliegenden Erfindung lag daher die Aufgabe zugrunde, geeignete Verbindungen zur Speicherung von latenter Wärme bereitzustellen, welche die genannten Nachteile entsprechend dem Stand der Technik nicht aufweisen, sondern ein kongruentes Schmelzverhalten aufweisen, technisch einfach und kostengünstig herstellbar sind und eine ausreichende Langzeitstabilität besitzen.

Diese Aufgabe wurde erfindungsgemäß durch die schmelzbaren Amid-Verbindungen der allgemeinen Formel (I) 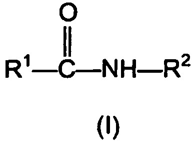 gemäß Anspruch 1 gelöst.

Es hat sich nämlich überraschenderweise gezeigt, dass die erfindungsgemäß vorgeschlagenen Amid-Verbindungen vorteilhafte Eigenschaften als Latentwärmespeichermedium besitzen. Außerdem weisen die entsprechenden Amid-Verbindungen günstige toxikologische Eigenschaften auf und sind zudem wenig korrosiv, was ebenfalls nicht vorhersehbar war.

Entsprechend der vorliegenden Erfindung werden schmelzbare Amid-Verbindungen der allgemeinen Formel (I) zur Speicherung von latenter Wärme eingesetzt, wobei
R¹ = ein linearer C₅-C₁₇-Alkyl-Rest,
R² = CN oder W-X-CO-R³,
W = -(CH₂-CH₂-O)ₙ-CH₂-CH₂-, -(CH(CH₃)-CH₂-O)ₙ-CH(CH₃)-CH₂-, -(CH₂)ₘ,
X = NH oder O,
R³ = ein linearer C₁-C₂₄-Alkyl-Rest,
n = 0 bis 10,
m = 2 bis 12
bedeuten.

R¹ ist ein linearer C₅-C₁₇-, bevorzugt C₅-C₁₅- oder C₈-C₁₃-Alkylrest. R³ kann vorzugsweise ein linearer C₆-C₁₇-Alkyl-Rest, bevorzugt C₇-C₁₅- oder C₉-C₁₁-Alkyl-Rest sein. n kann beliebige Werte zwischen 0 und 10 wie 1 bis 9, 2 bis 8, 3 bis 7 oder 4 bis 6 annehmen. m kann beliebige Werte von 2 bis 12, wie etwa 3 bis 10, 4 bis 9, 5 bis 7 oder 6 annehmen. Besonders bevorzugte Beispiele für die Bedeutungen der Reste R¹ bis R³, W, X, n und m sind in der nachstehenden Tabelle 1 angegeben.

Die erfindungsgemäßen Amide lassen sich auf verschiedene bekannte Weisen herstellen. Beispielsweise können Carbonsäuren der Formel R¹-COOH mit Aminen der Formel R²-NH₂ umgesetzt werden. Typischerweise wird dabei die Carbonsäure zusammen mit dem Amin erhitzt, das entstehende Wasser destillativ abgetrennt (vgl. Houben-Weyl, Bd. 8, 1952, S. 654). Im Falle von R² = H (nicht erfindungsgemäß) kann alternativ zu Ammoniak auch Harnstoff als Reaktionspartner eingesetzt werden (vgl. D.Murthy et. al., Paintindia 16, 39 (1966)), wobei auf die Abtrennung von Reaktionswasser verzichtet werden kann. Das entstehende Amid ist oftmals ohne weitere Reinigung für den Einsatz als Latentwärmespeicher geeignet. Gegebenenfalls kann jedoch eine weitere Reinigung durch Destillation und/oder Kristallisation angeschlossen werden.

Sollten Ester der Säuren R¹-COOH günstig zugänglich sein, so ist deren Umsetzung mit einem Amin der Formel R²-NH₂ problemlos möglich. Entsprechende Verfahren sind wohlbekannt (vgl. Houben-Weyl, Bd.8, 1952, S.658 ff). Typischerweise wird der Ester mit einem Amin der Formel R²-NH₂ erhitzt und der entstehende Akohol vorzugsweise destillativ abgetrennt. Alternativ kann der entstehende Alkohol auch im Reaktiongemisch verbleiben, und wird erst im Rahmen der Produktaufarbeitung abgetrennt, z. B. durch Auswaschen mit Wasser.

Ein drittes bevorzugtes Verfahren zur Herstellung der hierin offenbarten Amide mit R² = H ist die Hydrolyse der entsprechenden Nitrile R¹-CN. Drei verschiedene Verfahren sind für die Durchführug der Hydrolyse bevorzugt:
1.) die alkalisch katalysierte Hydrolyse, wobei neben Wasser als Reaktionspartner alkalisch reagierende Katalysatoren (z.B. Alkali- oder Erdalkali-Hydroxide, Metalloxide, Amine) zugesetzt werden.
2.) die durch Säuren oder sauer reagierende Stoffe (z.B. Mineralsäuren, saure Metallsalze, Lewis-Säuren) katalysierte Hydrolyse unter Zusatz von Wasser.
3.) durch Einwirkung von Wasserstoffperoxid auf das entsprechende Nitril in schwach alkalischer Lösung, ggf. unter Zusatz eines Lösungsvermittlers. Entsprechende Verfahren und Verfahrensvarianten sind wohlbekannt und werden z. B. in Houben-Weyl, Bd. 8, 1052, S. 661 ff beschrieben.

Andere bekannte Verfahren, wie z.B. die Umsetzung von Carbonsäurehalogeniden der Formel R¹-CO-X mit X = Cl, Br, J mit Aminen, die Synthesen durch Beckmann- oder Schmidt-Umlagerung, durch Arndt-Eistert-Reaktionen bzw. durch Willgerodt-Reaktion (siehe Houben-Weyl Bd. 8, 1952, S.665 ff) sind ebenfalls möglich, jedoch aufgrund der schwierigeren Reaktionsführung und der weniger preisgünstig zugänglichen Rohstoffe nicht bevorzugt.

Abhängig von der Bedeutung des Restes R² kann anstatt des Amins R²-NH₂ auch eine Vorstufe desselben mit einer Säure der Formel R¹-COOH in oben geschilderter Weise umgesetzt werden, und anschließend durch weitere Reaktionen der gewünschte Rest R² aufgebaut werden.

Die erfindungsgemäßen Amid-Verbindungen der Formel R¹-CO-NH-R² haben sich als überraschend stabil gegenüber Zersetzungsreaktionen, z. B. Hydrolyse, Selbstkondensation und Elimination erwiesen. Zudem besitzen sie keine korrosiven Eigenschaften, eine geringe Toxizität und ein günstiges ökotoxikologisches Profil. In der Langzeitanwendung als Latentwärmespeicher sind sie stabil und zeigen einen konstanten Schmelzpunkt sowie eine hohe, über lange Zeit konstante Schmelzenthalpie. Beispiele für erfindungsgemäße Amidverbindungen der Formel R¹-CO-NH-R² sind in Tabelle 1 aufgelistet.

| Tabelle 1: | Typische Beispiele der erfindungsgemäßen Amidverbindungen zur Anwendung als Latentwärmespeicher _{.} | | |
|---|---|---|---|
| R¹ | R² | Verbindung R¹-CO-NH-R² | literaturbekannter Schmelzpunkt bzw. Schmelzbereich |
| Ethyl | H | Propionamid (Vergleich) | 75 - 78 °C |
| Propyl | H | Butyramid (Vergleich) | 115 - 116 °C |
| C₅H₁₁ | H | Capronamid (Vergleich) | 101 °C |
| C₇H₁₅ | H | Caprinamid (Vergleich) | 104 - 106 °C |
| C₈H₁₇ | H | Pelarqonamid Nergleich) | 98 - 99 °C |
| C₁₁H₂₃ | H | Lauramid (Vergleich) | 98 - 99 °C |
| C₁₃H₂₇ | H | Myristinamid (Vergleich) | 80 - 83 °C |
| C₁₅H₃₁ | H | Palmitamid (Vergleich) | 105 - 107 °C |
| C₁₇H₃₅ | H | Stearamid (Vergleich) | 107 - 109 °C |
| C₈H₁₇ | CN | N-Cyanpelargonamid | 80 °C |
| c₁₅H₃₁ | CN | N-Cyanpalmitinamid | 62 - 65 °C |
| C₁₇H₃₅ | CN | N-Cyanstearamid | 74-75 °C |
| Methyl | C₁₈H₃₇ | N-Stearyl-propionamid (Vergl.) | 77 - 78 °C |
| C₄H₉ | C₁₈H₃₇ | N-Stearyl-valeramid (Vergl.) | 77 - 78 °C |
| C₇H₁₅ | C₁₈H₃₇ | N-Stearyl-octanamid (Vergl.) | 78 - 79 °C |
| C₁₁H₂₃ | C₁₈H₃₇ | N-Stearyl-lauramid (Vergleich) | 82 - 84 °C |
| C₁₃H₂₇ | C₁₈H₃₇ | N-Stearyl-myristinamid (Vergl.) | 88 - 89 °C |
| C₁₅H₃₁ | C₁₈H₃₇ | N-Stearyl-palmitamid (Vergl.) | 91 - 92 °C |
| C₁₇H₃₅ | C₁₈H₃₇ | N-Stearyl-stearamid (Vergl.) | 94 °C |
| C₁₇H₃₅ | (CH₂)₂-O-CO-C₁₇H₃₅ | Stearamidoethyl-stearat | 92 - 94 °C |
| C₆H₁₃ | (CH₂)₂-NH-CO-C₆H₁₃ | Ethylen-bis-heptanamid | 173 °C |
| C₇H₁₅ | (CH₂)₂-NH-CO-C₇H₁₅ | Ethylen-bis-caprinamid | 171 °C |
| C₉H₁₉ | (CH₂)rNH-CO-C₉H₁₉ | Ethylen-bis-decanamid | 162 - 163°C |
| C₁₁H₂₃ | (CH₂)₂-NH-CO-C₁₁H₂₃ | Ethylen-bis-dodecanamid | 158 - 159 °C |
| C₁₅H₃₁ | (CH₂)₂-NH-CO-C₁₅H₃, | Ethylen-bis-palmitamid | 152 - 153 °C |
| C₁₇H₃₅ | (CH₂)₂-NH-CO-C₁₇H₃₅ | Ethylen-bis-stearamid | 140 - 150 °C |
| C₁₇H₃₅ | (CH₂)₃-NH-CO-C₁₇H₃₅ | 1,3-Propylen-bis-stearamid | 133 -135 °C |
| C₁₇H₃₅ | (CH₂)₆NH-CO-C₁₇H₃ | Hexamethylen-bis-stearamid | 140 °C |

Die erfindungsgemäßen Amid-Verbindungen decken einen weiten, den technischen Anforderungen exakt entsprechenden Temperaturbereich von 40 bis 180 °C ab. Durch einfache chemische Modifikation unter Zuhilfenahme technisch preiswert zugänglicher Rohstoffe kann eine Vielzahl von nützlichen, den Anforderungen anpassbaren Amid-Verbindungen hergestellt werden.

Vorzugsweise liegt der Schmelzpunkt der erfindungsgemäßen Amidverbindungen bei 50 bis 160 °C, insbesondere bei 60 bis 140 °C oder 70 bis 120 °C.

Die erfindungsgemäßen Amid-Verbindungen besitzen überraschenderweise eine sehr hohe Schmelzwärme von mindestens 160 J/g und vorzugsweise von über 200 J/g. Durch diese sehr hohe Schmelzwärme sind die erfindungsgemäßen Amid-Verbindungen in der Lage, hohe Wärmemengen in einem kleinen Volumen zu speichern.

Die Anwendung der erfindungsgemäßen Amid-Verbindungen erfolgt vorzugsweise in technischen Apparaturen oder Vorrichtungen, in denen zumindest zeitweise Wärmeenergie im Temperaturbereich zwischen 40 und 180 °C anfällt, und in denen ggf. zeitversetzt Wärmeenergie im Temperaturbereich zwischen 40 und 180 °C benötigt wird. Die anfallende bzw. benötigte Wärmeenergie liegt vorzugsweise im Temperaturbereich zwischen 50 und 160 °C, bevorzugt zwischen 60 und 140 °C, weiter bevorzugt zwischen 60 und 120 °C.

Energiequellen für die anfallende, zu speichernde Wärme sind z. B. Sonnenenergie, Erdwärme, Abwärme aus technischen Prozessen und Apparaten, Abwärme aus der Kühlung bzw. Lüftung von Gebäuden und/oder Räumen oder aber gezielt zu kostengünstigen Zeitpunkten, z. B. durch Nachtstrom erzeugte Wärme. Die Wärmeenergie liefernden technischen Vorrichtungen können z. B. sein: thermische Sonnenkollektoren, Wärmetauscher, Wärmepumpen sowie elektrische Heizungen.

Soll die gespeicherte Wärmeenergie aus dem System wieder entnommen werden, so wird diese bevorzugt über Umwälzkreisläufe, Wärmetauscher oder Wärmepumpen zum Verbraucher gebracht. Hierbei kann die Wärme auf feste (bevorzugt Baustoffe), flüssige (bevorzugt Wasser) oder gasförmige (bevorzugt Luft) Wärmeträger übertragen werden. Typische Einsatzbereiche sind die Bereitung von Warmwasser, die Erwärmung, Temperierung bzw. Heizung von Gebäuden und Räumen sowie die (Wieder)-Erwärmung von technischen Apparaturen, insbesondere von Verbrennungskraftmaschinen und Brennstoffzellen.

Die erfindungsgemäßen Amid-Verbindungen können zum Einsatz als Latentwärmespeicher in verschiedenen Formen verwendet werden. Beispielsweise kann der Speicher in kompakter Form eine größere Menge der Amid-Verbindungen enthalten, bevorzugt im direkten Kontakt mit einer, ggf. durch geeignete Maßnahmen vergrößerten Wärmeaustauschfläche. Alternativ können die Amid-Verbindungen in Kompartimenten (z. B. Behälter, Röhren, Waben) eingeschlossen sein, wobei das die Wärme abgebende bzw. aufnehmende Medium die Kompartimente umströmt.

Eine weitere Möglichkeit des Einsatzes der erfindungsgemäßen Amid-Verbindungen ist der Einschluss in Kapseln bzw. Mikrokapseln mit einer bevorzugten Teilchengröße von 0,1 bis 100 mm, vorzugsweise 1,0 bis 10 mm. Diese können dann z. B. in feste oder flüssige Trägerstoffe eingeschlossen werden. Das Wandmaterial der Kapseln oder Mikrokapseln besteht vorzugsweise aus Kunststoffen, wie z. B. Polyolefinen, Polyamiden oder Polyestern. Alternativ hierzu kann auch ein Wandmaterial für die Kapseln oder Mikrokapseln in Form von Metallen, ausgewählt aus der Gruppe Aluminium, Kupferwerkstoffe oder Eisenlegierungen eingesetzt werden. Beispielsweise lassen sich Baustoffe und Wandmaterialien in Gebäuden durch Zusatz mikroverkapselter Amid-Verbindungen so modifizieren, dass bei hohen Temperaturen Wärme aufgenommen wird, die bei tieferen Temperaturen wieder abgegeben wird. Auf diese Weise lässt sich die Temperatur regulieren und der Wärmebedarf in Gebäuden reduzieren.

Die erfindungsgemäß vorgeschlagenen Amid-Verbindungen der Formel R¹-CO-NH-R² können in reiner Form oder im Gemisch mit weiteren Amiden der Formel R¹-CO-NH-R² und/oder im Gemisch mit sonstigen Stoffen eingesetzt werden.

Weitere Amide können z. B. Homologe der Fettsäure-Reihe darstellen, die als natürliche Verunreinigungen in den Säurekomponenten R¹-COOH oder R²-NH₂ enthalten sind. Sie können aus technischen Gründen enthalten sein, oder aber absichtlich zugesetzt werden.

Gründe für den Zusatz weiterer Amide oder sonstiger Stoffe können z. B. die Modifikation des Schmelzpunktes oder Schmelzbereichs sein, durch Mischkristallbildung oder Bildung eines Eutektikums. Auch kann es erforderlich sein, durch gezielte Beimischung die Schmelzviskosität der erfindungsgemäßen Amidverbindungen herabzusetzen, um einen verbesserten Wärmeaustausch zu erreichen.

Zur Vermeidung von Unterkühlungsphänomenen und zur Verhinderung einer verzögerten Wärmefreisetzung bei der Energientnahme können kristallisationsfördernde Stoffe zugesetzt werden. Vorzugsweise stellen diese ebenfalls Amidverbindungen der Formel R¹-CO-NH-R² dar, bevorzugt mit einem erhöhten Schmelzpunkt gegenüber der Hauptkomponente, es können jedoch auch andere Stoffe zum Einsatz kommen.

In einer bevorzugten Ausführungsform werden die erfindungsgemäßen Amidverbindungen der Formal R¹-CO-NH-R² in Kombination mit wärmleitfähigem Material verwendet. Als wärmeleitfähiges Material ist insbesondere Graphit geeignet, vorzugsweise in Form von Blähgraphit. Das wärmeleitfähige Material kann vorzugsweise in einer Menge von etwa 1 bis 20 Gew.-%, bevorzugt 2 bis 17 Gew.-%, weiter bevorzugt 5 bis 12 Gew.-% eingesetzt werden.

Die erfindungsgemäß vorgeschlagenen Amid-Verbindungen der Formel R¹-CO-NH-R² sind ideal geeignet zur Anwendung als Latentwärmespeichermedium, da sie die nachteiligen Effekte der bekannten Latentwärmespeichermedien nicht aufweisen. Aus diesem Grund sind sie für technische Anwendungen besonders geeignet.

Die nachfolgenden Beispiele sollen das Wesen der Erfindung näher erläutern.

### Beispiele

### Beispiel 1 (Vergleichsbeispiel)

Eine DSC-Apparatur (differential scanning calorimetry) gemäß DIN 53765 bzw. ASTM E 793-95 wurde mittels eines Indium-Standards kalorimetrisch kalibriert.

In einen Aluminiumtiegel wurden 10 mg Palmitamid (R¹ = C₁₅H₃₁, R² = H) eingewogen. Der mit einem Aluminiumdeckel verschlossene Tiegel wurde in die DSC-Apparatur eingesetzt. Mit einer Heizrate von 5 °C pro Minute wurde von 30 bis 140 °C aufgeheizt und die Messkurve aufgezeichnet. Nach Integration und Auswertung ergaben sich folgende Messdaten:
Onset-Temperatur (Schmelzbeginn): 104,0 °C
Peak-Temperatur (Schmelzpunkt): 105,5 °C
integrale Schmelzwärme: 266,5 J/g

Das Material speichert demnach im Temperaturbereich von 100 bis 110 °C eine Wärmemenge von 266,5 J/g.

Die Probe wurde in der DSC-Apparatur anschließend mit 5 °C pro Minute abgekühlt. Es ergaben sich folgende Messdaten:
Onset-Temperatur (Erstarrungsbeginn): 102,0 °C
Peak-Temperatur (Erstarrungspunkt): 100,8 °C
integrale Erstarrungswärme: 231,8 J/g

Das Material gibt demnach im Temperaturbereich 110 bis 100 °C eine gespeicherte Wärmemenge von 231,8 J/g wieder ab. Das sind 87 % der zuvor aufgenommenen Wärmemenge.

Die Probe wurde anschließend in der DSC-Apparatur mit einer Heizrate von 5° C pro Minute wieder aufgeheizt. Es ergaben sich folgende Messdaten:
Onset-Temperatur (Schmelzbeginn): 101,8 °C
Peak-Temperatur (Schmelzpunkt): 105,2 °C
integrale Schmelzwärme: 232,3 J/g

Das Material ist demnach fähig, in reversibler Weise Wärme aufzunehmen und wieder abzugeben. Die gespeicherte Wärmemenge bleibt nach dem ersten Schmelzen annähernd konstant.

### Beispiele 2

Analog zu Beispiel 1 wurden die nachfolgend genannten Stoffe in der obigen DSC-Apparatur vermessen. Die erhaltenen Messdaten sind in Tabelle 3 angegeben.

| Tabelle 3: DSC-Messung von Verbindungen der Formel R¹-CO-NH-R² | | |
|---|---|---|
| Amidverbindung | Aufheizen: onset / peak | erste Schmelzenthalpie |
| | Abkühlen: onset / peak | Erstarrungsenthalpie |
| | Aufheizen: onset / peak | zweite Schmelzenthalpie |
| Acetamid (Vergleich) | 79,5 °C / 81,2 °C | 217,5 J/g |
| R' = CH₃ | 55,5 °C / 42,2 °C | 207,2 J/g |
| R² = H | 68,5 °C / 71,8 °C | 215,8 J/g |
| Propionamid (Vergleich) | 80,4 °C / 84,7 °C | 242,4 J/g |
| R¹ = C₂H₅ | 72,7 °C / 70,9 °C | 240,7 J/g |
| R² = H | 79,5 °C / 85,1 °C | 240,3 J/g |
| Butyramid (Vergleich) | 114,3 °C / 115,5 °C | 215,3 J/g |
| R¹ = C₃H₇ | 105,6 °C / 96,7 °C | 204,9 J/g |
| R² = H | 112,8 °C, 115,7 °C | 203,6 J/g |
| Lauramid (Vergleich) | 101,2 °C / 102,0 °C | 245,5 J/g |
| R¹ = C₁₁H₂₃ | 99,4 °C / 96,1 °C | 245,9 J/g |
| R² = H | 100,7 °C / 102,6 °C | 244,0 J/g |
| Stearamid (Vergleich) | 96,1 °C / 100,1 °C | 218,2 J/g |
| R¹ = C₁₇H₃₅ | 96,3 °C, 93,4 °C | 219,8 J/g |
| R² = H | 93,7 °C, 99,8 °C | 227,6 J/g |
| Ethylen-bis-stearamid | 140,8 °C / 145,6 °C | 221,6 J/g |
| R¹ = C₁₇H₃₅ | 142,5 °C / 140,8 °C | 224,7 J/g |
| R² = (CH2)₂-NH-CO-C₁₇H₃₅ | 140,8 °C / 144,6 °C | 221,9 J/g |

### Beispiel 3 (Vergleichsbeispiel)

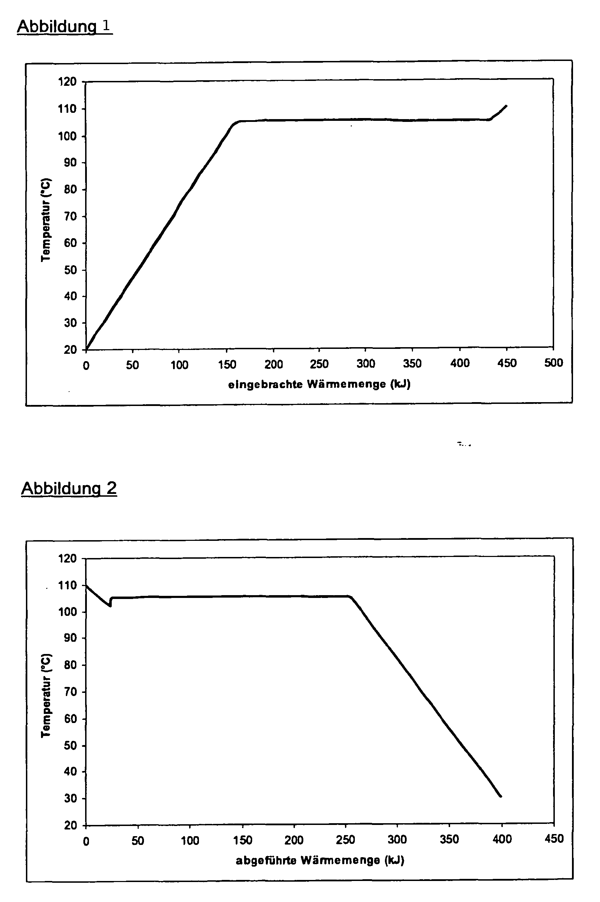

1000 g Palmitamid wurden in einen wärmeisolierten Behälter, der mit einer Heiz- und Kühlschlange ausgestattet ist, als Schmelze eingefüllt. Dann ließ man den gesamten Inhalt erstarren. Die Ausgangstemperatur betrug 20 °C. Durch die Heiz- und Kühlschlange wurde ein Wärmeträgermedium mit einer Temperatur von 110 °C mit einem konstanten Fluss gepumpt. Über die Temperaturdifferenz zwischen Zu- und Ablauf wurde die eingebrachte Wärmemenge verfolgt. Zusätzlich wurde die Temperatur des Palmitamid verfolgt. Es ergab sich eine in Abbildung 1 dargestellte Temperaturkurve.

Das verwendete Palmitamid speichert somit im Temperaturbereich zwischen 20 und 100 °C eine fühlbare Wärmemenge von 160 kJ/kg. Im Bereich der Schmelztemperatur zwischen 100 und 105 °C beträgt die speicherbare Wärmemenge ca. 280 kJ/kg, wobei der Latentwärmeanteil weit überwiegt. Mit einer Starttemperatur von 110 °C wurde nun durch die Heiz-Kühlschlange kaltes Wärmeträgermedium mit einer Temperatur von 30 °C in konstantem Fluss geleitet. Aus der Temperaturdifferenz zwischen Zu- und Ablauf wurde die vom System gelieferte Wärmemenge verfolgt. Zusätzlich wurde die Temperatur des Stearamid verfolgt. Es ergab sich eine in Abbildung 2 dargestellte Temperaturkurve.

Das verwendete Palmitamid setzt somit im Bereich der Schmelz- bzw. Erstarrungstemperatur zwischen 105 und 100 °C eine latente Wärmemenge von ca. 260 kJ/kg frei. Diese entspricht annähernd der zuvor eingebrachten Wärmemenge. Die kurzzeitige Unterschreitung der Erstarrungstemperatur erklärt sich durch eine verzögerte Kristallisation. Sobald die Gesamtmasse erstarrt ist, wird weiterhin fühlbare Wärme freigesetzt, wobei das nutzbare Temperaturniveau mit fortschreitender Wärmeentnahme schnell abnimmt. Die Funktion der erfindungsgemäßen Amid-Verbindungen als effizientes Wärmespeichermedium ist somit ausgezeichnet.

### Beispiel 4 (Verlgeichsbeispiel)

10 g Palmitamid wurden in einen Aluminiumbehälter gefüllt und dieser verschlossen. Die Probe wurde für 12 Stunden auf 120 °C erhitzt. Anschließend wurde sie abgekühlt und 12 Stunden bei 60 °C gelagert. Diese Prozedur (Aufheizen + Abkühlen) wurde 100 mal wiederholt. Die Gesamt-Versuchsdauer betrug 100 Tage.

Dann wurde der Behälter geöffnet. Er zeigte keinerlei Korrosionserscheinungen.

Das Palmitamid wurde mittels DSC gemäß Beispiel 1 untersucht. Es ergaben sich folgende Werte:
Onset-Temperatur (Schmelzbeginn): 98,2 °C
Peak-Temperatur (Schmelzpunkt): 103,7 °C
integrale Schmelzwärme: 227,5 J/g

Das Material zeigt somit keine signifikante Verschlechterung der wärmetechnischen Eigenschaften. Die Langzeitstabilität der erfindungsgemäßen Materialien ist somit hervorragend.

## Patentansprüche

1. Verwendung von schmelzbaren Amid-Verbindungen der allgemeinen Formel (I) 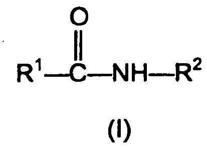 wobei
R¹ = n-C₅-C₁₇-Alkyl
R² = CN oder W-X-CO-R³,
W = -(CH₂-CH₂-O)ₙ-CH₂-CH₂-, -(CH(CH₃)-CH₂-O)ₙ-CH(CH₃)-CH₂-, -(CH₂)ₘ-
X = NH oder O,
R³ = n-C₁-C₂₄-Alkyl, insbesondere n-C₃-C₁₆-Alkyl
n = 0 bis 10, insbesondere 1-6
m = 2 bis 12, insbesondere 3-8
bedeuten,
zur Speicherung von latenter Wärme.

2. Verwendung nach Anspruch 1,
**dadurch gekennzeichnet,**
**dass** die Amid-Verbindungen einen Schmelzpunkt von 40 bis 180 °C, bevorzugt 60 bis 120 °C aufweisen, und/oder eine Schmelzwärme von mindestens 160 J/g, bevorzugt ≥ 200 J/g besitzen.

3. Verwendung nach Anspruch 1 oder 2,
**dadurch gekennzeichnet,**
**dass** die Amid-Verbindungen in technischen Apparaturen und/oder Vorrichtungen eingesetzt werden, in denen zumindest zeitweise Wärmeenergie im Temperaturbereich zwischen 40 und 180 °C, bevorzugt zwischen 60 und 120 °C anfällt oder in denen ggf. zeitversetzt Wärmeenergie im Temperaturbereich zwischen 40 und 180 °C, bevorzugt zwischen 60 und 120 °C benötigt wird.

4. Verwendung nach einem der Ansprüche 1 bis 3,
**dadurch gekennzeichnet,**
**dass** als Energiequelle für die anfallende, zu speichernde Wärme Sonnenenergie, Erdwärme, Abwärme aus technischen Prozessen und Apparaturen, Abwärme aus der Kühlung bzw. Lüftung von Gebäuden und/oder Räumen oder durch Nachtstrom erzeugte Wärme dient.

5. Verwendung nach einem der Ansprüche 1 bis 4,
**dadurch gekennzeichnet,**
**dass** die Wärmeenergie liefernden technischen Vorrichtungen aus thermischen Sonnenkollektoren, Wärmetauschern, Wärmepumpen sowie elektrischen Heizungen bestehen.

6. Verwendung nach einem der Ansprüche 1 bis 5,
**dadurch gekennzeichnet,**
**dass** die mit Hilfe der Amid-Verbindungen gespeicherte Wärmeenergie mit Hilfe von Umwälzkreisläufen, Wärmetauschern oder Wärmepumpen auf feste, flüssige oder gasförmige Wärmeträger übertragen werden.

7. Verwendung nach einem der Ansprüche 1 bis 6,
**dadurch gekennzeichnet,**
**dass** die Amid-Verbindungen zur Bereitung von Warmwasser, zur Erwärmung, Temperierung bzw. Heizung von Gebäuden und Räumen sowie zur (Wieder-)Erwärmung von technischen Apparaturen herangezogen werden.

8. Verwendung nach einem der Ansprüche 1 bis 7,
**dadurch gekennzeichnet,**
**dass** der Latentwärmespeicher eine größere Menge der Amid-Verbindungen in kompakter Form enthält.

9. Verwendung nach einem der Ansprüche 1 bis 7,
**dadurch gekennzeichnet,**
**dass** die Amid-Verbindungen in Kompartimenten in Form von Behältern, Röhren oder Waben eingeschlossen sind und das die Wärme abgebende bzw. aufnehmende Medium die Kompartimente umströmt.

10. Verwendung nach einem der Ansprüche 1 bis 9,
**dadurch gekennzeichnet,**
**dass** die Amid-Verbindungen in Form von Kapseln bzw. Mikrokapseln eingesetzt werden, wobei die Kapseln bzw. Mikrokapseln vorzugsweise
eine Teilchengröße von 0,1 bis 100 mm aufweisen.

11. Verwendung nach Anspruch 10,
**dadurch gekennzeichnet,**
**dass** das Wandmaterial der Kapseln oder Mikrokapseln Kunststoffe, wie z. B. Polyolefinen, Polyamiden oder Polyestern, umfasst.

12. Verwendung nach Anspruch 10,
**dadurch gekennzeichnet,**
**dass** als Wandmaterial der Kapseln oder Mikrokapseln Metalle, ausgewählt aus der Gruppe Aluminium, Kupferwerkstoffe oder Eisenlegierungen, eingesetzt werden.

13. Verwendung nach einem der vorhergehenden Ansprüche,
**dadurch gekennzeichnet,**
**dass** die schmelzbare Amidverbindung der allgemeinen Formel I in Kombination mit wenigstens einem wärmeleitfähigen Material verwendet wird.

14. Verwendung nach Anspruch 13,
**dadurch gekennzeichnet,**
**dass** das wärmeleitfähige Material in einer Menge von 1 bis 20 Gew.-% bezogen auf die Amidverbindung eingesetzt wird.

15. Verwendung nach einem der Ansprüche 13 oder 14,
**dadurch gekennzeichnet,**
**dass** das wärmeleitfähige Material Graphit, insbesondere Blähgraphit umfasst.

## Claims

1. Use of fusible amide compounds of the general formula (I) 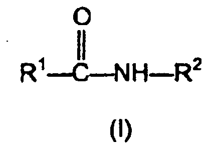 wherein
R¹ = n-C₅-C₁₇-alkyl
R² = CN or W-X-CO-R³,
W = -(CH₂-CH₂-O)ₙ-CH₂-CH₂-, -(CH(CH₃)-CH₂-O)ₙ-CH(CH₃)-CH₂-, -(CH₂)ₘ-
X = NH or O,
R³ = n-C₁-C₂₄-alkyl, in particular n-C₃-C₁₆-alkyl
n = 0 to 10, in particular 1-6
m = 2 to 12, in particular 3-8,
for storing latent heat.

2. Use according to claim 1,
**characterised in that**
the amide compounds exhibit a melting point of 40 to 180°C, preferably of 60 to 120 °C, and/or have a heat of fusion of at least 160 J/g, preferably of ≥ 200 J/g.

3. Use according to claim 1 or claim 2,
**characterised in that**
the amide compounds are used in technical/industrial apparatuses and/or installations, in which thermal energy in the temperature range between 40 and 180 °C, preferably between 60 and 120 °C, arises at least intermittently or in which thermal energy in the temperature range between 40 and 180 °C, preferably between 60 and 120 °C is required optionally with a time delay.

4. Use according to any one of claims 1 to 3,
**characterised in that**
the energy source for the heat which arises and is to be stored is solar energy, geothermal heat, waste heat from technical/industrial processes and apparatuses, waste heat from cooling or ventilating buildings and/or spaces or heat generated by off-peak electricity.

5. Use according to any one of claims 1 to 4,
**characterised in that**
the technical/industrial installations which supply the thermal energy consist of thermal solar collectors, heat exchangers, heat pumps and electrical heating systems.

6. Use according to any one of claims 1 to 5,
**characterised in that**
the thermal energy stored with the assistance of the amide compounds is transferred to solid, liquid or gaseous heat-transfer media with the assistance of circulating circuits, heat exchangers or heat pumps.

7. Use according to any one of claims 1 to 6,
**characterised in that**
the amide compounds are used to provide hot water, for warming, adjusting the temperature of or heating buildings and spaces and for (re)heating technical/industrial apparatuses.

8. Use according to any one of claims 1 to 7,
**characterised in that**
the latent heat accumulator contains a relatively large quantity of the amide compounds in compact form.

9. Use according to any one of claims 1 to 7,
**characterised in that**
the amide compounds are enclosed in compartments in the form of containers, tubes or honeycombs and the medium which releases or absorbs heat flows around the compartments.

10. Use according to any one of claims 1 to 9,
**characterised in that**
the amide compounds are used in the form of capsules or microcapsules, the capsules or microcapsules preferably exhibiting a particle size of 0.1 to 100 mm.

11. Use according to claim 10,
**characterised in that**
the wall material of the capsules or microcapsules comprises plastics, such as for example polyolefins, polyamides or polyesters.

12. Use according to claim 10,
**characterised in that**
metals selected from the group aluminium, copper materials or ferrous alloys are used as the wall material of the capsules or microcapsules.

13. Use according to any one of the preceding claims,
**characterised in that**
the fusible amide compound of the general formula I is used in combination with at least one thermally conductive material.

14. Use according to claim 13,
**characterised in that**
the thermally conductive material is used in an amount of 1 to 20 wt.% relative to the amide compound.

15. Use according to either one of claims 13 or 14,
**characterised in that**
the thermally conductive material comprises graphite, in particular expanded graphite.

## Revendications

1. Utilisation de composés amides fusibles de la formule générale (I) 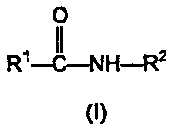 dans laquelle
R¹ = n-alkyle en C₅-C₁₇
R² = CN ou W-X-CO-R³
W = -(CH₂-CH₂-O)-CH₂-CH₂-, -(CH(CH₃)-CH₂-O)ₙ-CH(CH₃)-CH₂-, -(CH₂)ₘ-,
X = NH ou O,
R³ = n-alkyle en C₁-C₂₄, en particulier n-alkyle en C₃-C₁₆
n = 0 à 10, en particulier 1 à 6
m = 2 à 12, en particulier 3 à 8,
pour l'accumulation de chaleur latente.

2. Utilisation selon la revendication 1,
**caractérisée en ce que**
les composés amides présentent un point de fusion compris entre 40 et 180 °C, de préférence entre 60 et 120 °C, et/ou possèdent une chaleur de fusion d'au moins 160 J/g, de préférence égale ou supérieure à 200 J/g.

3. Utilisation selon la revendication 1 ou 2,
**caractérisée en ce que**
les composés amides sont mis en oeuvre dans des appareillages et/ou des dispositifs techniques, dans lesquels, au moins temporairement, de l'énergie thermique est produite dans la plage de températures s'étendant de 40 à 180 °C, de préférence de 60 à 120 °C ou dans lesquels, le cas échéant avec un décalage temporel, de l'énergie thermique est nécessaire dans la plage de températures s'étendant de 40 à 180 °C, de préférence de 60 à 120 °C,.

4. Utilisation selon l'une des revendications 1 à 3,
**caractérisée en ce que**
l'énergie solaire, l'énergie géothermique, la chaleur perdue de processus et d'appareillages techniques, la chaleur perdue du refroidissement ou de la ventilation de bâtiments et/ou de locaux ou la chaleur produite par le courant de nuit servent de source d'énergie pour la chaleur produite à accumuler.

5. Utilisation selon l'une des revendications 1 à 4,
**caractérisée en ce que**
les dispositifs techniques fournissant l'énergie thermique se composent de collecteurs solaires thermiques, d'échangeurs de chaleur, de pompes à chaleur et de chauffages électriques.

6. Utilisation selon l'une des revendications 1 à 5,
**caractérisée en ce que**
l'énergie thermique accumulée à l'aide des composés amides est transférée à l'aide de circuits de circulation, d'échangeurs de chaleur ou de pompes à chaleur sur des caloporteurs solides, liquides ou gazeux.

7. Utilisation selon l'une des revendications 1 à 6,
**caractérisée en ce que**
les composés amides sont utilisés pour la préparation d'eau chaude, pour le réchauffement, la thermostatisation ou le chauffage de bâtiments et de locaux, ainsi que pour le (ré)chauffage d'appareillages techniques.

8. Utilisation selon l'une des revendications 1 à 7,
**caractérisée en ce que**
l'accumulateur de chaleur latente contient une proportion assez importante des composés amides sous forme compacte.

9. Utilisation selon l'une des revendications 1 à 7,
**caractérisée en ce que**
les composés amides sont inclus dans des compartiments sous forme de récipients, de tuyaux ou d'alvéoles et que le milieu libérant ou absorbant la chaleur s'écoule autour du compartiment.

10. Utilisation selon l'une des revendications 1 à 9,
**caractérisée en ce que**
les composés amides sont mis en oeuvre sous la forme de capsules ou de microcapsules présentant de préférence une taille de particules de 0,1 à 100 mm.

11. Utilisation selon la revendication 10,
**caractérisée en ce que**
le matériau de la paroi des capsules ou des microcapsules comprend des matières plastiques telles que, par exemple, des polyoléfines, des polyamides ou des polyesters.

12. Utilisation selon la revendication 10,
**caractérisée en ce que**
sont utilisés comme matériau de la paroi des capsules ou des microcapsules, des métaux sélectionnés parmi le groupe constitué de l'aluminium, des matériaux de cuivre ou des alliages de fer.

13. Utilisation selon l'une des revendications précédentes,
**caractérisée en ce que**
le composé d'amide fusible de la formule générale I est mis en oeuvre en combinaison avec au moins un matériau thermoconductible.

14. Utilisation selon la revendication 13,
**caractérisée en ce que**
le matériau thermoconductible est mis en oeuvre dans une proportion comprise entre 1 et 20 % en poids par rapport au composé amide.

15. Utilisation selon l'une des revendications 13 ou 14,
**caractérisée en ce que**
le matériau thermoconductible comprend le graphite, en particulier le graphite gonflé.
